# FASCICULE DE BREVET EUROPEEN

(11) **EP 2 238 727 B1**
(45) Date de publication et mention de la délivrance du brevet: **27.09.2017**
(21) Numéro de dépôt: 08863677.4
(22) Date de dépôt: 10.12.2008
(51) Int. Cl.: H04L 29/06

(54) **PROCÉDÉ DE COMMUNICATION POUR GÉRER DES SESSIONS DE COMMUNICATION AU NIVEAU D'UNE PASSERELLE DOMESTIQUE**
VERFAHREN ZUR KOMMUNIKATION FÜR DIE VERWALTUNG VON KOMMUNIKATIONSSITZUNGEN AUF DER EBENE EINES HÄUSLICHEN GATEWAY
METHOD OF COMMUNICATION FOR MANAGING COMMUNICATION SESSIONS AT THE LEVEL OF A DOMESTIC GATEWAY

(30) Priorité: 19.12.2007 FR 0760020
(43) Date de publication de la demande: 13.10.2010
(73) Titulaire: Orange, 75015 Paris (FR)
(72) Inventeur: COLLIN, Guillaume, F-22290 Goudelin (FR); BOUILLE, Philippe, F-22560 Pleumeur Bodou (FR)
(74) Mandataire: Desormiere, Pierre-Louis
(86) Numéro de dépôt international: PCT/FR2008/052267
(87) Numéro de publication internationale: WO 2009/080989

(56) Documents cités:
- US-A1- 2006 153 102
- ABOUABDALLA NATIONAL ADVANCED IPV6 CENTER (NAV6) R SURESWARAN UNIVERSITY SCIENCE MALAYSIA A HELWEH MULTIMEDIA RESEARCH LAB O: "Multipoint Session Initiation Protocol (MSIP); draft-abouabdalla-multisip-00.txt" 2 août 2006 (2006-08-02), IETF STANDARD-WORKING-DRAFT, INTERNET ENGINEERING TASK FORCE, IETF , XP015046388 ISSN: 0000-0004 abrégé alinéa [6.1.4]

## Description

### Arrière-plan de l'invention

L'invention concerne le domaine général de la gestion de sessions de communications multimédia dans un réseau de télécommunications.

L'invention trouve une utilisation privilégiée mais non limitative dans la gestion d'appels téléphoniques de type VoIP (« Voice Over IP ») au niveau d'une passerelle domestique.

Il est connu d'utiliser une passerelle domestique en mode multi-communications, pour gérer simultanément plusieurs communications entre une pluralité de terminaux locaux et une pluralité de terminaux distants, sur une même ligne VoIP (par exemple, en utilisant un même numéro de téléphone associé à une même connexion ADSL (« Asymmetric Digital Subscriber Line »). Ce mode multi-communications permet de gérer des services de multi-conférences aptes à faire communiquer plus de deux terminaux au sein d'une même session de communication.

Les services de multi-conférences actuels proposent d'associer un numéro de téléphone de référence à une session de communication, ce numéro de téléphone étant alloué puis communiqué par la passerelle domestique à l'ensemble des terminaux locaux liés à la passerelle. Ayant connaissance de ce numéro de référence, chaque terminal compose ce numéro à un instant prédéterminé, de sorte que la passerelle établisse une session de communication (conférence téléphonique) en incluant les terminaux ayant composé le numéro de référence.

Ainsi, les services de multi-conférences actuels nécessitent un pont de conférence particulier lié à un numéro téléphonique qui peut être appelé par plusieurs participants, ce qui présente l'inconvénient d'être très peu flexible et en particulier ne permet pas à un terminal de s'insérer dans une communication en cours.

Le document intitulé "Multipoint Session Initiation Protocol (MSIP); draft-abouabdalia-multisip-00.txt" datant du 2 août 2006 (O. ABOUABDALLA, NATIONAL ADVANCED IPV6 CENTER (NAV6) et al) divulgue un protocole d'initiation de session multipoint pour la création, modification et clôture de sessions avec un participant ou plus.

Le document US 2006/153102 A1 datant du 13 juillet 2006 divulgue un contrôleur pour contrôler une session multipartite dans un système de communication.

### Objet et résumé de l'invention

L'invention est définie dans le jeu de revendications ci-joint.

La présente invention offre une solution qui ne présente pas les inconvénients mentionnés ci-avant, en proposant un procédé de communication au sein d'une pluralité de terminaux locaux connectés à une passerelle domestique et une pluralité de terminaux distants, ledit procédé de communication comprenant :
- une étape d'identification par la passerelle domestique d'au moins une session de communication en cours entre au moins un terminal local donné et un terminal distant;
- une étape de signalisation par la passerelle domestique de la session de communication en cours, à au moins un autre terminal local, sans requête préalable de cet autre terminal local; et
- une étape d'intégration, lors de laquelle la passerelle domestique intègre cet autre terminal local dans la session de communication en cours engageant le terminal local donné, en réponse à une requête d'intégration émise par cet autre terminal local.

De manière avantageuse, le procédé de communication selon l'invention permet à un terminal local d'intégrer de manière simple et flexible une session de communication en cours engageant un autre terminal local d'après les informations fournies par la passerelle domestique et sur simple requête auprès de la passerelle domestique.

Selon une caractéristique de l'invention, la passerelle domestique identifie toutes les sessions de communication en cours engageant chaque terminal local, lors de l'étape d'identification précitée et signale l'ensemble des sessions de communication en cours, à la pluralité de terminaux locaux, lors de l'étape de signalisation précitée. En réponse à une requête d'intégration émise par un autre terminal local, la passerelle domestique intègre cet autre terminal local dans une session de communication en cours engageant un terminal local donné, parmi l'ensemble des sessions de communications en cours déterminées préalablement.

Ainsi, chaque terminal local est informé de manière exhaustive de l'intégralité des sessions de communication en cours. Le caractère exhaustif des informations signalées par la passerelle domestique permet à un utilisateur d'un terminal local quelconque d'avoir connaissance de toutes les sessions de communications existantes à chaque instant et de s'insérer dans l'une quelconque de ces sessions.

De manière avantageuse, l'invention favorise l'établissement de sessions de conférence, c'est-à-dire des sessions de communication faisant intervenir au moins deux terminaux locaux. Ceci a pour avantage d'une part de minimiser le nombre de sessions de communications indépendantes en cours en évitant des redondances et d'autre part de renforcer les interactions entre les utilisateurs des différents terminaux locaux, en favorisant l'usage des sessions de communications existantes.

L'invention est particulièrement avantageuse, par exemple, dans le cas où un terminal distant est en cours de communication avec un premier terminal local et où un deuxième terminal local souhaite entrer en communication avec ce même terminal distant. Dans ce cas, l'invention offre la possibilité au deuxième terminal local de se joindre à la communication existante plutôt que d'établir une nouvelle communication indépendante uniquement avec le terminal distant.

Selon une autre caractéristique de la présente invention, la passerelle communique avec au moins un terminal distant selon un protocole à initiation de session, tel que protocole SIP (« Session Initiation Protocol »).

En particulier, l'utilisation du protocole SIP permet avantageusement de gérer des sessions de communication de type VoIP, ce protocole étant actuellement déployé ou en cours de déploiement par la plupart des opérateurs de télécommunications et de ce fait, est devenu un standard largement adopté notamment par les fabricants de terminaux.

Les étapes du procédé de communication décrit ci-dessus étant exécutées par une passerelle domestique, la présente invention vise également une passerelle domestique placée en coupure de flux entre une pluralité de terminaux locaux d'un réseau domestique et une pluralité de terminaux distants, la passerelle domestique étant apte à gérer au moins une session de communication entre au moins un terminal local et au moins un terminal distant.

Conformément à la présente invention, la passerelle domestique comprend :
- des moyens pour identifier des sessions de communication en cours engageant chaque terminal local connecté à la passerelle domestique ;
- des moyens pour communiquer l'ensemble des sessions de communication en cours identifiées, à la pluralité de terminaux locaux connectés, sans requête préalable de ces terminaux locaux ; et
- des moyens pour intégrer un terminal local dans une session de communication en cours, sur réception d'une requête d'intégration émise par ce terminal local.

Les avantages particuliers de cette passerelle domestique sont les mêmes que ceux associés au procédé de communication selon l'invention, décrit ci-avant.

L'invention vise également un système de communication comprenant une passerelle domestique selon la présente invention, une pluralité de terminaux locaux sur un réseau domestique et une pluralité de terminaux distants, la passerelle domestique étant placée en coupure de flux entre la pluralité de terminaux locaux et la pluralité de terminaux distants.

Dans un mode particulier de réalisation, les différentes étapes du procédé de communication décrit ci-avant sont déterminées par des instructions de programmes d'ordinateurs.

En conséquence, l'invention vise aussi un programme d'ordinateur sur un support d'informations, ce programme étant susceptible d'être mis en oeuvre dans la passerelle domestique selon la présente invention ou plus généralement dans un ordinateur, ce programme comportant des instructions adaptées à la mise en oeuvre des étapes d'un procédé de communication selon l'invention tel que décrit ci-avant.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Enfin, l'invention vise également l'utilisation du procédé de communication selon l'invention tel que décrit ci-dessus pour la gestion d'appels téléphoniques de type voix sur IP.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les dessins :
- la figure 1 illustre de manière schématique un système comprenant une passerelle domestique selon la présente invention ; et
- la figure 2 illustre sous forme d'organigramme les étapes du procédé selon l'invention.

### Description détaillée d'un mode de réalisation

Un mode de réalisation de la présente invention va être maintenant décrit de manière détaillée dans le cadre de la gestion de communications ou d'appels téléphoniques VoIP au niveau d'une passerelle domestique.

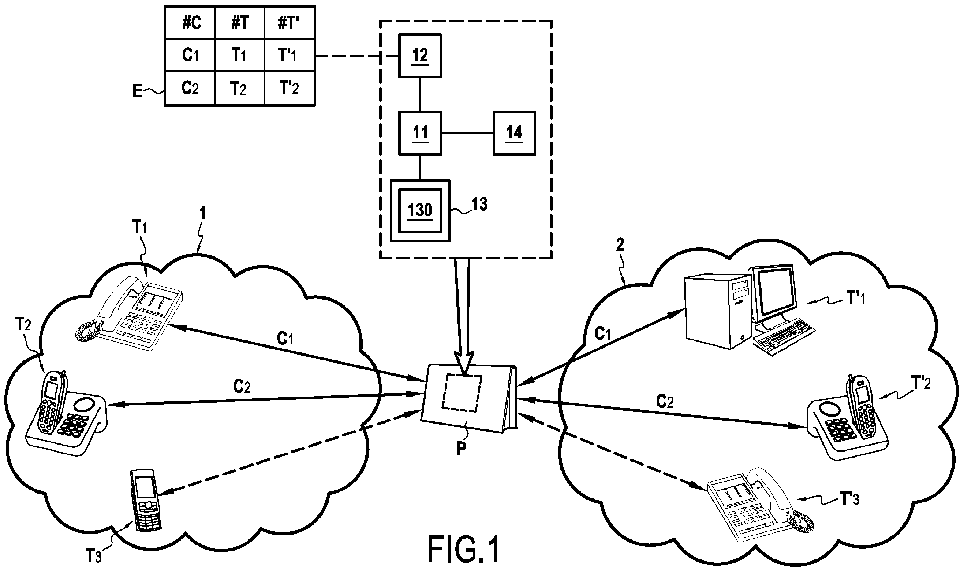

La figure 1 représente un système conforme à l'invention comprenant une passerelle domestique P placée en coupure de flux entre d'une part un ensemble de terminaux locaux comprenant un premier terminal local T₁, un deuxième terminal local T₂ et un troisième terminal local T₃ sur un réseau local 1 et d'autre part un ensemble de terminaux distants comprenant un premier terminal distant T'₁, un deuxième terminal distant T'₂, et un troisième terminal distant T'₃ sur un réseau de télécommunications 2.

Le réseau local 1 est un réseau domestique chez un client abonné auprès d'un opérateur (ou fournisseur de services) et le réseau de télécommunication 2 est un réseau IMS (« IP Multimedia Subsystem ») de l'opérateur. Le réseau IMS est un réseau opérateur convergent standardisé NGN (Next Generation Network) par 3GPP. Ce réseau est compatible avec les réseaux de téléphonie mobile ou fixe et des réseaux de type IP tel que le réseau Internet. Ainsi, le réseau IMS permet d'offrir des services multimédias sur les architectures réseaux sous-jacentes. L'IMS utilise notamment la technologie VoIP basée sur le protocole de signalisation SIP.

A titre d'exemple, le premier terminal local T₁ est un téléphone filaire SIP, le deuxième terminal local T₂ est un téléphone sans fil (DECT/SIP), le troisième terminal local T₃ est un téléphone Wi-Fi (802.11) embarquant une pile SIP, le premier terminal distant T'₁ est un ordinateur sur lequel est installé une application de téléphonie sur IP (softphone SIP), le deuxième terminal distant T'₂ est un téléphone sans fil (DECT/SIP), et le troisième terminal distant T'₃ est un téléphone filaire SIP.

Bien évidemment, l'homme du métier pourra utiliser n'importe quel autre type de terminal local apte à communiquer avec la passerelle domestique P.

A titre d'exemple, la passerelle domestique P est un modem-routeur ADSL (par exemple : Orange LiveBox™) apte à gérer simultanément plusieurs sessions de communication VoIP entre les terminaux locaux T₁, T₂, T₃ et les terminaux distants T'₁, T'₂, T'₃.

La passerelle domestique P comprend au moins :
- un Proxy SIP qui assure la signalisation entre les différents terminaux,
- un Registrar SIP destiné à enregistrer dynamiquement chaque terminal local auprès de la passerelle domestique P pour signaler leur emplacement courant, notamment en associant un URI (« Uniform Resource Identifier ») à une adresse IP du terminal et en stockant cette association dans une base de données ;
- un B2BUA (« Back To Back User Agent »);
- une base de données B (non représentée), destinée à stocker des informations d'enregistrement relatives aux terminaux ; et
- une table d'états E destinée à mémoriser l'état de communication de chaque terminal déterminé (ou de manière équivalente, l'ensemble des communications en cours).

Le Registrar SIP supervise l'état de communication de chaque terminal local et enregistre l'ensemble des communications en cours dans la table d'états E. Ainsi, la passerelle domestique P comprend des moyens pour identifier des sessions de communication en cours engageant chaque terminal local connecté à la passerelle domestique.

Le Proxy SIP informe chaque terminal local de l'état de communication de chaque terminal tel que déterminé par le Registrar SIP et mémorisé dans la table d'états. Ainsi, la passerelle domestique P comprend des moyens pour communiquer l'ensemble des sessions de communication en cours identifiées à l'ensemble des terminaux locaux connectés à la passerelle domestique P.

Les opérants SIP doivent souvent exécuter des tâches qui vont au-delà de la fonction d'acheminement des messages que le proxy SIP est apte à réaliser. A titre d'exemple, de telles tâches comprennent la dissimulation de topologie réseau et la terminaison des appels. En règle générale, ces tâches ne peuvent pas être mises en oeuvre avec un proxy SIP, tel que défini dans la RFC3261, parce que la responsabilité d'un proxy SIP est essentiellement limitée au seul cheminement des messages. L'utilisation d'un B2BUA comprenant un User Agent SIP Client et Server, permet de contourner cette difficulté.

Dans le mode de réalisation décrit ici, la passerelle domestique P a l'architecture conventionnelle d'un ordinateur. Elle comporte notamment un processeur 11, une mémoire vive de type RAM 12 et une mémoire morte de type ROM 13.

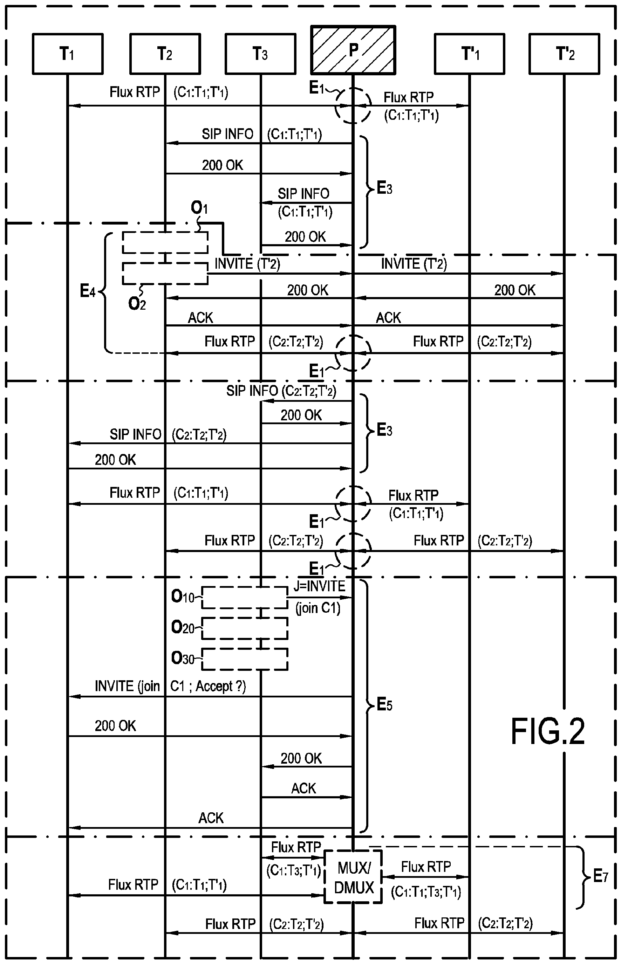

La mémoire morte 13 mémorise un programme d'ordinateur 130 conforme à l'invention, ce programme comportant des instructions pour l'exécution des étapes du procédé de communication conforme à l'invention, ces étapes étant représentées sur l'organigramme de la figure 2.

Dans cet exemple, le programme d'ordinateur 130 est une application serveur 130 en cours d'exécution par le processeur 11 de la passerelle domestique P.

La passerelle domestique P comporte aussi des moyens de communication 14 adaptés à communiquer avec les terminaux.

Le Proxy SIP, le Registrar et le B2BUA sont implémentés sous forme de moyens logiciels mis en oeuvre notamment par le processeur 11 et la mémoire morte 13 de la passerelle domestique P.

La base de données B et la table d'états E sont stockées dans la mémoire vive 12 de la passerelle domestique P.

Le procédé de communication selon la présente invention va être maintenant décrit en détail, en référence à la figure 2, dans le cadre d'un scénario donné à titre d'exemple non limitatif.

Le protocole de signalisation utilisé dans ce mode de réalisation est le protocole SIP (« Session Initiation Protocol »). Toutefois, l'homme du métier comprendra que d'autres protocoles de signalisation, tels que H.323 ou MGCP (« Media Gateway Control Protocol ») peuvent être appliqués dans le cadre de la présente invention, pour permettre l'intégration d'un terminal dans une session de communication en cours.

Dans l'exemple présent, on suppose initialement qu'une première communication C₁ est établie entre un premier terminal local T₁ et un premier terminal distant T'₁.

Lors d'une étape d'identification E₁, la passerelle domestique P identifie au moyen du Registrar SIP les communications en cours engageant chaque terminal local connecté à la passerelle domestique P, chaque communication en cours identifiée étant mémorisée par le Registrar SIP dans la table des états E.

Pour cela, on suppose que les terminaux connectés à la passerelle domestique P ont été préalablement identifiés par celle-ci de manière connue dans la base de données B.

Dans l'exemple présent, la passerelle domestique P identifie la première communication C₁ en détectant la présence d'un flux de données (flux RTP : « Real Time Protocol ») en cours d'échange entre le premier terminal local T₁ et le premier terminal distant T'₁, ce flux de données transitant par la passerelle domestique P qui est placée en coupure de flux entre ces deux terminaux.

Lors d'une étape de signalisation E₃, la passerelle domestique P signale à l'ensemble des terminaux locaux connectés à la passerelle domestique P, l'ensemble des sessions de communication en cours identifiées lors de l'étape d'identification E₁ et mémorisées dans la table des états E.

Dans l'exemple présent, la passerelle domestique P informe les deuxième T₂ et troisième T₃ terminaux locaux, qu'une première communication C₁ est en cours entre le premier terminal local T₁ et le premier terminal distant T'₁. Tout terminal local enregistré auprès de la passerelle domestique P est informé de l'existence de la première communication C₁, indépendamment du fait qu'il soit déjà en cours de communication ou non.

Pour cela, lors de l'étape de signalisation E₃, la passerelle domestique P envoie un message de signalisation SIP INFO (C₁ : T₁ ; T'₁) aux deuxième T₂ et troisième T₃ terminaux locaux qui, en réponse, adressent à la passerelle domestique P un message SIP 200 OK indiquant qu'ils ont bien reçu le message de signalisation les informant que la première communication C₁ est en cours entre le premier terminal local T₁ et le premier terminal distant T'₁.

Sur réception du message de signalisation, chaque terminal (qu'il soit déjà en cours de communication ou non) informe son utilisateur que la première communication C₁ est en cours. A cet effet, chaque terminal est équipé d'une application client comportant une interface homme-machine qui intègre l'information comprise dans le message de signalisation SIP INFO (C₁ : T₁ ; T'₁) reçu de la passerelle domestique P, de manière à présenter cette information à l'utilisateur.

De manière générale, toutes les sessions de communications en cours renseignées dans des messages de signalisation SIP INFO diffusés par la passerelle domestiques sont affichées sur les terminaux locaux, au moyen de leur interface homme-machine.

A ce stade, les deuxième T₂ et troisième T₃ terminaux locaux sont informés de l'existence de la première communication C₁ en cours. L'application client installée sur chacun de ces terminaux offre le choix à leur utilisateur au moyen de leur interface homme-machine, de participer à cette première communication C₁ en cours (option référencée O₁ sur la figure 2) ou d'établir une nouvelle communication avec un autre terminal distant tel que le deuxième terminal distant T'₂ (option référencée O₂ sur la figure 2).

On suppose que l'utilisateur du deuxième terminal local T₂ souhaite établir une nouvelle communication (dite deuxième communication C₂) avec le deuxième terminal distant T'₂, lors d'une étape d'établissement E₄ de communication.

Pour cela, le deuxième terminal local T₂ envoie, au moyen de son application client, un message d'invitation SIP INVITE(T'₂) au deuxième terminal distant T'₂ via la passerelle domestique P, de manière à initier une nouvelle session de communication. Sur réception du message d'invitation SIP INVITE(T'₂), le deuxième terminal distant T'₂, transmet un message de réponse 200 OK pour accepter l'établissement d'une nouvelle session de communication (dite deuxième communication C₂).

Sur réception de ce message de réponse 200 OK, le deuxième terminal local T₂ confirme l'établissement de la deuxième communication C₂ auprès du deuxième terminal distant T'₂ en lui transmettant un message de confirmation ACK conforme au protocole SIP.

Un flux de données RTP(C₂ : T₂ ; T'₂) est alors échangé entre le deuxième terminal local T₂ et le deuxième terminal distant T'₂ dans la deuxième session de communication C₂.

Lors de l'étape d'identification E₁ déjà décrite, la passerelle domestique P identifie la deuxième communication C₂ en cours en détectant la présence du flux de données RTP(C₂ : T₂ ; T'₂) transitant par la passerelle domestique P et en cours d'échange entre le deuxième terminal local T₂ et le deuxième terminal distant T'₂.

La passerelle domestique P met donc à jour la table d'états E, en statuant que le deuxième terminal local T₂ est en cours de communication avec le deuxième terminal distant T'₂ dans la deuxième session de communication C₂.

Dès lors que la deuxième communication C₂ est identifiée et mémorisée dans la table d'états E, la passerelle domestique P informe, lors d'une nouvelle itération de l'étape de signalisation E₃ déjà décrite, les premier T₁ et troisième T₃ terminaux locaux, que le deuxième terminal local T₂ est en cours de communication avec le deuxième terminal distant T'₂ dans la deuxième session de communication C₂.

Pour cela, la passerelle domestique P envoie un message de signalisation SIP INFO (C₂ : T₂ ; T'₂) aux premier T₁ et troisième T₃ terminaux locaux, qui adressent en réponse à la passerelle domestique P un message de réponse SIP 200 OK indiquant qu'ils ont bien reçu le message de signalisation SIP INFO (C₂ : T₂ ; T'₂).

A ce stade, les premier T₁ et troisième T₃ terminaux locaux sont informés de l'existence des première C₁ et deuxième C₂ communications en cours et ont le choix d'intégrer l'une quelconque de ces communications en cours ou bien d'établir une nouvelle communication avec un autre terminal distant, tel que le troisième terminal distant T'₃.

En particulier, l'application client du troisième terminal local T₃ qui n'est pas en cours communication offre à l'utilisateur, via son interface homme-machine, l'une quelconque des options suivantes :
- passer un nouvel appel (par exemple, vers le troisième terminal distant T'₃ qui n'est actuellement pas en cours de communication) - option référencée O₁₀ sur la figure 2;
- se joindre à la première communication en cours C₁ (option O₂₀);
- se joindre à la deuxième communication en cours C₂. (option O₃₀)

L'application client du premier terminal local T₁ qui est déjà en cours de communication, offre à son utilisateur via son interface homme-machine, l'option de mettre en attente son interlocuteur (premier terminal distant T'₁) pour se joindre à la deuxième communication en cours C₂.

On suppose que le troisième terminal local T₃ souhaite intégrer la première communication en cours C₁, lors d'une étape d'intégration E₅. Ainsi, l'utilisateur sélectionne via l'interface homme-machine de l'application client du troisième terminal local T₃, l'option de se joindre à la première communication C₁.

Pour cela, le troisième terminal local T₃ envoie à la passerelle domestique P une requête d'intégration référencée J, de type INVITE (JOIN : C₁) conformément au protocole SIP. Cette requête d'intégration J utilise la fonction d'intégration JOIN prévue par le protocole SIP, cette fonction étant appliquée à un identifiant noté C₁ de la première communication en cours C₁.

La passerelle domestique P transmet au premier terminal local T₁ participant à la première communication C₁ la requête d'intégration J complétée d'une demande de validation (« Accept ? ») : INVITE (JOIN C₁ : Accept ?).

Sur réception de cette requête d'intégration complétée, l'interface homme-machine du premier terminal local T₁ informe son utilisateur que le troisième terminal local T₃ souhaite se joindre à la première communication C₁ en cours et demande à l'utilisateur du premier terminal local T₁ s'il autorise l'intégration du troisième terminal local T₃ dans la communication en cours C₁.

Si l'utilisateur du premier terminal local T₁ accepte l'intégration du troisième terminal local T₃, il envoie, au moyen de son interface homme-machine, un message de confirmation 200 OK à la passerelle domestique P et celle-ci informe le troisième terminal local T₃ de sa confirmation, en lui envoyant un message de confirmation 200 OK.

Sur réception du message de confirmation 200 OK par le troisième terminal local T₃, celui-ci confirme qu'il a bien reçu une réponse définitive à la requête d'intégration, en envoyant un message confirmation ACK à la passerelle domestique P, qui transmet ce message de confirmation ACK au premier terminal local T₁.

Le premier terminal local T₁ est alors intégré à la première la communication en cours C₁ par la passerelle domestique P. La première session de communication C₁ devient alors une session de conférence entre les premier T₁ et troisième T₃ terminaux locaux et le premier terminal distant T'₁.

A cet effet, la passerelle domestique P multiplexe, lors d'une étape de multiplexage E₇, un premier flux de données noté RTP(C₁ : T₃ ; T'₁) échangé entre le troisième terminal local T₃ et le premier terminal distant T'₁ avec un deuxième flux de données noté RTP(C₁ : T₁ ; T'₁) échangé entre le premier terminal local T₁ et le premier terminal distant T'₁, de manière à obtenir un flux multiplexé noté RTP(C₁ : T₁ ; T₃ ; T'₁).

Dans le sens de transmission inverse, la passerelle domestique P effectue un démultiplexage du flux de données multiplexé RTP(C₁ : T₁ ; T'₁) de manière à distribuer les données respectivement vers le premier terminal local T₁ (deuxième flux) et vers le troisième terminal local T₃ (deuxième flux).

Le procédé de communication décrit ci-dessus s'applique de manière générale à la gestion de session de communication multimédia permettant l'échange de données (textuelles, audio et/ou vidéo) en temps réel. Ainsi, le domaine d'application de la présente invention ne se limite pas au cas de la téléphonie sur IP, mais comprend également par exemple la visiophonie sur IP (V²oIP : « Voice and Video over IP ») ou la messagerie instantanée.

## Revendications

1. Procédé de communication au sein d'une pluralité de terminaux locaux (T₁, T₂, T₃) connectés à une passerelle domestique (P), ledit procédé comprenant :
▪ une étape d'identification (E₁) par la passerelle domestique (P) de toutes les sessions de communication en cours (C₁) entre chaque terminal local (T₁, T₂) et un terminal distant respectif (T'₁, T'₂), la passerelle domestique étant en coupure de flux entre chaque terminal local et chaque terminal distant,
dans lequel, lors de l'étape d'identification, la passerelle domestique (P) mémorise dans une table d'états (E) chaque communication en cours identifiée,
▪ une étape de signalisation (E₃) par la passerelle domestique (P) de l'ensemble des sessions de communication en cours (C₁; C₂) à ladite pluralité de terminaux locaux (T₁, T₂, T₃), sans requête préalable de ladite pluralité de terminaux locaux; et
▪ une étape d'intégration (E₅), lors de laquelle la passerelle domestique (P) intègre un terminal local donné (T₃) dans une session de communication en cours (C₁) engageant un autre terminal local (T₁), en réponse à une requête d'intégration (J) émise par ledit terminal local donné (T₃).

2. Procédé selon la revendication 1, **caractérisé en ce que** la passerelle domestique (P) communique avec ledit terminal distant (T'₁, T'₂, T'₃) selon un protocole à initiation de session.

3. Procédé selon la revendication 1 ou 2, dans lequel la session de communication en cours (C₁) engageant un autre terminal local (T₁) est une communication téléphonique de type voix sur IP.

4. Passerelle domestique (P) placée en coupure de flux entre une pluralité de terminaux locaux (T₁, T₂, T₃) d'un réseau domestique et au moins un terminal distant (T'₁, T'₂, T'₃), ladite passerelle étant apte à gérer au moins une session de communication entre au moins un terminal local et au moins un terminal distant, ladite passerelle comprenant :
▪ des moyens (11, 13, 130, 12, 14) pour identifier toutes les sessions de communication en cours (C₁) engageant chaque terminal local (T₁, T₂), et pour mémoriser dans une table d'états (E) chaque communication en cours identifiée;
▪ des moyens (11, 13, 130, 12, 14) pour signaler l'ensemble des sessions de communication en cours (C₁; C₂) à ladite pluralité de terminaux locaux (T₁, T₂, T₃), sans requête préalable de la pluralité de terminaux locaux (T₃, T₂, T₃); et
▪ des moyens (11, 13, 130, 12, 14) pour intégrer un terminal local donné (T₃) dans une session de communication en cours (C₁) engageant un autre terminal local (T₁), en réponse à une requête d'intégration (J) émise par ledit terminal local donné (T₃).

5. Système de communication comprenant une pluralité de terminaux locaux (T₁, T₂, T₃) sur un réseau domestique et au moins un terminal distant (T'₁, T'₂, T'₃), ledit système étant **caractérisé en ce qu'**il comprend en outre une passerelle domestique (P) selon la revendication 4, placée en coupure de flux entre la pluralité de terminaux locaux (T₁, T₂, T₃) et chaque terminal distant (T'₁, T'₂, T'₃).

6. Programme d'ordinateur (130) comportant des instructions pour l'exécution des étapes du procédé de communication selon la revendication 1 ou 3.

7. Support d'enregistrement (13) lisible par un ordinateur sur lequel est enregistré le programme d'ordinateur (130) selon la revendication 6.

## Patentansprüche

1. Verfahren zur Kommunikation innerhalb mehrerer lokaler Terminals (T₁, T₂, T₃), die mit einem häuslichen Gateway (P) verbunden sind, wobei das Verfahren umfasst:
- einen Schritt der Identifikation (E₁), durch das häusliche Gateway (P), aller zwischen jedem lokalen Terminal (T₁, T₂) und einem jeweiligen entfernten Terminal (T'₁, T'₂) laufenden Kommunikationssitzungen (C₁), wobei das häusliche Gateway den Fluss zwischen jedem lokalen Terminal und jedem entfernten Terminal unterbricht,
wobei in dem Identifikationsschritt das häusliche Gateway (P) in einer Zustandstabelle (E) jede identifizierte laufende Kommunikation speichert,
- einen Schritt der Signalisierung (E₃), durch das häusliche Gateway (P), der Gesamtheit der laufenden Kommunikationssitzungen (C₁; C₂) an die mehreren lokalen Terminals (T₁, T₂, T₃), ohne vorherige Anforderung der mehreren lokalen Terminals; und
- einen Schritt der Integration (E₅), in dem das häusliche Gateway (P) ein gegebenes lokales Terminal (T₃) in eine laufende Kommunikationssitzung (C₁) mit einem anderen lokalen Terminal (T₁), ansprechend auf eine Integrationsanforderung (J), die von dem gegebenen lokalen Terminal (T₃) gesendet wird, integriert.

2. Verfahren nach Anspruch 1, **dadurch gekennzeichnet, dass** das häusliche Gateway (P) mit dem entfernten Terminal (T'₁, T'₂, T'₃) gemäß einem Sitzungseinleitungsprotokoll kommuniziert.

3. Verfahren nach Anspruch 1 oder 2, wobei die laufende Kommunikationssitzung (C₁) mit einem anderen lokalen Terminal (T₁) eine Telefonkommunikation vom Typ Voice-over-IP ist.

4. Häusliches Gateway (P), welches den Fluss zwischen mehreren lokalen Terminals (T₁, T₂, T₃) eines häuslichen Netzes und mindestens einem entfernten Terminal (T'₁, T'₂, T'₃) unterbrechend angeordnet ist, wobei das Gateway geeignet ist, mindestens eine Kommunikationssitzung zwischen mindestens einem lokalen Terminal und mindestens einem entfernten Terminal zu verwalten, wobei das Gateway umfasst:
- Mittel (11, 13, 130, 12, 14) zur Identifikation aller laufenden Kommunikationssitzungen (C₁) mit jedem lokalen Terminal (T₁, T₂) und zur Speicherung jeder identifizierten laufenden Kommunikation in einer Zustandstabelle (E);
- Mittel (11, 13, 130, 12, 14) zur Signalisierung der Gesamtheit der laufenden Kommunikationssitzungen (C₁; C₂) an die mehreren lokalen Terminals (T₁, T₂, T₃), ohne vorherige Anforderung der mehreren lokalen Terminals (T₃, T₂, T₃); und
- Mittel (11, 13, 130, 12, 14) zur Integration eines gegebenen lokalen Terminals (T₃) in eine laufende Kommunikationssitzung (C₁) mit einem anderen lokalen Terminal (T₁), ansprechend auf eine Integrationsanforderung (J), die von dem gegebenen lokalen Terminal (T₃) gesendet wird.

5. Kommunikationssystem, umfassend mehrere lokale Terminals (T₁, T₂, T₃) in einem häuslichen Netz und mindestens ein entferntes Terminal (T'₁, T'₂, T'₃),
wobei das System **dadurch gekennzeichnet ist, dass** es außerdem ein häusliches Gateway (P) nach Anspruch 4 umfasst, das den Fluss zwischen den mehreren lokalen Terminals (T₁, T₂, T₃) und jedem entfernten Terminal (T'₁, T'_{2,} T'₃) unterbrechend angeordnet ist.

6. Computerprogramm (130), umfassend Instruktionen zur Ausführung der Schritte des Kommunikationsverfahrens nach Anspruch 1 oder 3.

7. Computerlesbares Aufzeichnungsmedium (13), auf welchem das Computerprogramm (130) nach Anspruch 6 aufgezeichnet ist.

## Claims

1. Method of communication within a plurality of local terminals (T₁, T₂, T₃) connected to a domestic gateway (P), said method comprising:
• a step (E₁) of identification by the domestic gateway (P) of all the ongoing communication sessions (C₁) between each local terminal (T₁, T₂) and a respective remote terminal (T'₁, T'₂), the domestic gateway being spliced into the stream between each local terminal and each remote terminal,
in which, during the step of identification, the domestic gateway (P) stores in a state table (E) each ongoing communication identified,
• a step (E₃) of signalling by the domestic gateway (P) of the set of ongoing communication sessions (C₁; C₂) to said plurality of local terminals (T₁, T₂, T₃), without prior request of said plurality of local terminals; and
• a step (E₅) of integration, during which the domestic gateway (P) integrates a given local terminal (T₃) into an ongoing communication session (C₁) engaging another local terminal (T₁), in response to an integration request (J) sent by said given local terminal (T₃).

2. Method according to Claim 1, **characterized in that** the domestic gateway (P) communicates with said remote terminal (T'₁, T'₂, T'₃) according to a session initiation protocol.

3. Method according to Claim 1 or 2, in which the ongoing communication session (C₁) engaging another local terminal (T₁ is a telephone communication of voice over IP type.

4. Domestic gateway (P) spliced into the stream between a plurality of local terminals (T₁, T₂, T₃) of a domestic network and at least one remote terminal (T'₁, T'₂, T'₃), said gateway being able to manage at least one communication session between at least one local terminal and at least one remote terminal, said gateway comprising:
• means (11, 13, 130, 12, 14) for identifying all the ongoing communication sessions (C₁) engaging each local terminal (T₁, T₂), and for storing in a state table (E) each ongoing communication identified;
• means (11, 13, 130, 12, 14) for signalling the set of ongoing communication sessions (C₁; C₂) to said plurality of local terminals (T₁, T₂, T₃), without prior request of said plurality of local terminals (T₁, T₂, T₃); and
• means (11, 13, 130, 12, 14) for integrating a given local terminal (T₃) into an ongoing communication session (C₁) engaging another local terminal (T₁), in response to an integration request (J) sent by said given local terminal (T₃).

5. Communication system comprising a plurality of local terminals (T₁, T₂, T₃) on a domestic network and at least one remote terminal (T'₁, T'₂, T'₃), said system being **characterized in that** it furthermore comprises a domestic gateway (P) according to Claim 4, spliced into the stream between the plurality of local terminals (T₁, T₂, T₃) and each remote terminal (T'₁, T'₂, T'₃).

6. Computer program (130) comprising instructions for the execution of the steps of the method of communication according to Claim 1 or 3.

7. Recording medium (13) readable by a computer on which is recorded the computer program (130) according to Claim 6.
